# EUROPEAN PATENT APPLICATION

(11) **EP 1 903 819 A1**
(43) Date of publication of application: **26.03.2008**
(21) Application number: 06796532.7
(22) Date of filing: 18.08.2006
(51) Int. Cl.: H04Q 7/38, H04Q 7/22

(54) **WIRELESS COMMUNICATION TERMINAL APPARATUS, WIRELESS COMMUNICATION BASE STATION APPARATUS, WIRELESS COMMUNICATION SYSTEM AND TELEPHONE CALL CONNECTING METHOD**

(30) Priority: 19.08.2005 JP 2005238966
(71) Applicant: Matsushita Electric Industrial Co., Ltd., Kadoma-shi Osaka 571-8501 (JP)
(72) Inventor: AOYAMA, Takahisa, Matsushita Elect. Industrial Co., Ltd., 2-1-61, Shiromi,Chuo-ku, Osaka 540-6207 (JP); PETROVIC, Dragan, Matsushita Elect. Industrial Co., Ltd., 2-1-61, Shiromi,Chuo-ku, Osaka 540-6207 (JP)
(74) Representative: Zimmer, Franz-Josef
(86) International application number: PCT/JP2006/316221
(87) International publication number: WO 2007/020997

(57) **Abstract**

A wireless communication terminal apparatus, a wireless communication base station apparatus, a wireless communication system and a telephone call connecting method wherein the message size in a telephone call connection can be reduced. A broadcast information producing part (203) assigns cell level information , which is preconfiguration information managed by the cell level, and PLMN level information, which is preconfiguration information managed by the PLMN level, to different transmission units to produce broadcast information, which is then broadcasted from a broadcast information transmitting part (204) to UEs. A preconfiguration usage deciding part (208) determines whether a UE, which sets a channel, can use a preconfiguration. If the UE can use a preconfiguration, a control information producing part (209) causes control information to include the corresponding index, and then the control information is transmitted from a control information transmitting part (210) to the UE.

## Description

### Technical Field

The present invention relates to a radio communication terminal apparatus, radio communication base station apparatus, radio communication system and call connection method.

### Background Art

Generally, RAN (Radio Access Network) is configured with an RNC (Radio Network Controller) and Node B, the RNC is connected to CN (Core Network) which is exchange network through an Iu interface, and Node B is connected to a UE (User Equipment) through a radio interface.

A protocol of the radio interface is configured with layer 1 (physical layer), layer 2 (data link layer) and layer 3 (network layer), and a logical channel is defined between layer 3 and layer 2, and a transport channel is defined between layer 2 and layer 1.

Layer 2 is divided into two sub-layers; RLC (Radio Link Control) which controls a radio link and MAC (Medium Access Control) which controls assignment of radio resources.

Furthermore, layer 3 is divided into C-Plain which controls call settings or the like and U-Plain which transmits user information, and C-Plain is further divided into RRC (Radio Resource Control) which directly controls layer 1 and layer 2 and NAS (Non Accesses Stratum) which performs higher-layer control. Here, MM (Mobility Management) is a function that plays a central role in the NAS.

RRC provides several services, for example, reporting of broadcast information to all UEs in an area, calling of a specific UE, and setting, change or release of connections, and plays an important role in call connection between a UE and the network.

For establishing a call between a UE and the network, it is necessary to transmit a message including a great amount of information as setting information (hereinafter "IE (Information Element)"), which is a factor of delay in call connection. Messages having particularly a large amount of information are RRC connection setup (establishment of control information channel) and radio bearer setup (establishment of traffic data channel) which establish a radio channel.

Thus, as a method for reducing a call connection delay, the 3GPP (3rd Generation Partnership Project) standardizes a method called a "preconfiguration" (generic term for default configuration, predefined configuration and stored configuration) which reduces the size of a message related to call connection. A preconfiguration will be explained below.

As for the preconfiguration, Non-Patent Document 1 defines two methods based on a basic concept in which radio channel establishment information is not transmitted at all times, a UE is made to hold representative information and only an index is reported to the UE from the network.

First, a default configuration will be explained. In the default configuration, a configuration pattern is set by adding an index (14 types) to a configuration pattern defined in advance (see Section 2 of Non-Patent Document 1 for details), making the UE hold this index and reporting the index from the network.

Thus, the index is the only information (message such as RRC connection setup and radio bearer setup) that is transmitted from the network, and so the message size can be reduced significantly, so that it is possible to reduce a call connection delay. On the other hand, only defined configuration patterns can be used, and so it is not possible to perform setting unique to the operator or a setting according to UEs.

Next, a predefined configuration will be explained. In the predefined configuration, a configuration pattern and a corresponding index (16 types) are transmitted using a channel broadcasted from the network. A UE receives broadcast information transmitted from the network in an idle state or the like and holds the configuration pattern and index. The UE reports as to whether or not the UE holds a relationship between the configuration and the index to the network when an RRC connection request message is transmitted.

When eNB detects that the UE holds the broadcast information, the network can transmit only the index in the same way as the default configuration, reduce a message size, so that it is possible to reduce a call connection delay. Unlike the default configuration, the predefined configuration allows setting unique to the operator. However, radio resources are used wastefully when the UE not using the configuration transmitted with broadcast information is taken into consideration.

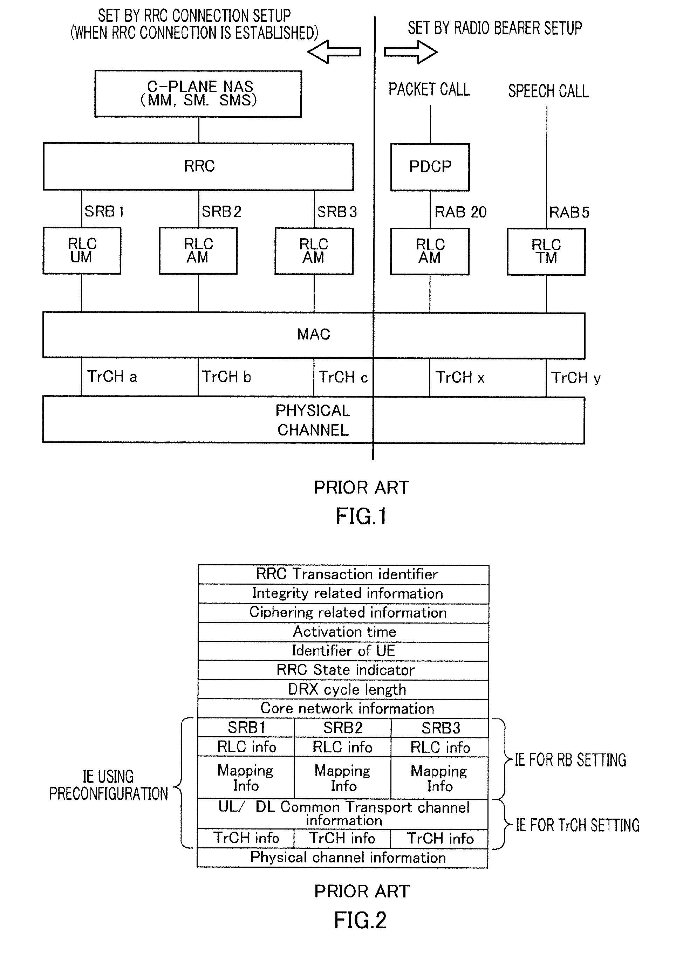

Here, FIG.1 shows a multi-call channel structure. As shown in FIG.1, three SRBs (Signaling Radio Bearer) are provided for control signals, and transport channels are assigned to the SRBs. Furthermore, a multi-call system including a packet call and a speech call is assumed here, and so RAB20 and RAB5 are provided as traffic data (RAB numbers are illustrated as an example). Transport channels are also assigned to these RABs. Therefore, in the example of FIG.1, five transport channels are mapped to a physical channel.

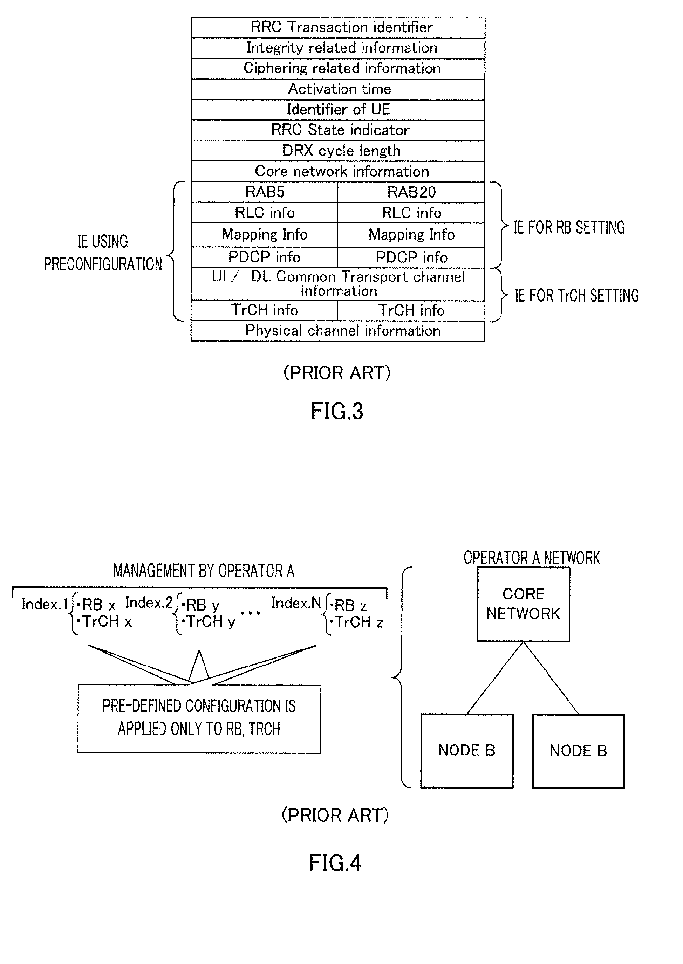

As a message for making the setting shown in FIG. 1 in the UE, FIG.2 shows an RRC connection setup message as an example, and FIG. 3 shows a radio bearer setup message as an example. As shown in FIG.2 and FIG.3, the preconfiguration is applied only to an RB setting IE and TrCH setting IE. Here, as shown in FIG.4, the predefined configuration is applied such that the content set by the predefined configuration is common among the operators. That is, the setting content needs to be the same across cells.
Non-Patent Document 1: 3GPP TS25.331, "Radio Resource Control(RRC) Protocol Specification"
Non-Patent Document 2: 3GPP TS24.008, "Mobile radio interface Layer 3 specification; Core network protocols; Stage 3"

### Disclosure of Invention

### Problems to be Solved by the Invention

However, if the content included in the configuration represented by one index includes all of the RB, TrCH and PhyCH, different indexes are necessary even when only part of the content is different, resulting in an enormous number of indexes.

Furthermore, if the preconfiguration is applied, not on a per operator basis, but on a per cell basis, the amount of information that the UE must acquire during cell reselection (i.e. cell change) increases.

As described above, it is difficult to apply the preconfiguration to the PhyCH having different settings per cell, and the preconfiguration can only be applied to RB setting IE and TrCH setting IE. As a result, the message size cannot be reduced significantly.

It is therefore an object of the present invention to provide a radio communication terminal apparatus, radio communication base station apparatus, radio communication system and call connection method for reducing a message size in call connection.

### Means for Solving the Problem

A radio communication base station apparatus employs a configuration having a management section that manages configuration information and indexes representing the configuration information in a layered manner, the configuration information comprising a combination pattern of channel setting information.

### Advantageous Effect of the Invention

According to the present invention, it is possible to reduce a message size in call connection.

### Brief Description of Drawings

FIG.1 shows a multi-call channel structure;
FIG.2 is a conceptual diagram showing an IE configuration of an RRC connection setup message;
FIG.3 is a conceptual diagram showing an IE configuration of a radio bearer setup message;
FIG.4 is a conceptual diagram showing a range of application of a predefined configuration;
FIG.5 is a sequence diagram showing general call connection steps for a UE and Node B;
FIG.6 is a block diagram showing the configuration of Node B according to Embodiment 1 of the present invention;
FIG.7 is a conceptual diagram showing PLMN level information;
FIG.8 is a conceptual diagram showing cell level information;
FIG.9 shows transmission assignment of the PLMN level information and cell level information;
FIG.10 is a conceptual diagram showing control information including indexes of a PLMN level and a cell level;
FIG. 11 is a block diagram showing the configuration of a UE according to Embodiment 1 of the present invention;
FIG.12 is a sequence diagram showing an overview of call connection steps for Node B shown in FIG.6 and the UE shown in FIG.11;
FIG.13 is a sequence diagram showing an overview of communication steps for the UE and Node B in a call connection state;
FIG.14 is a conceptual diagram showing an RRC connection request;
FIG.15 is a conceptual diagram showing RRC connection setup;
FIG.16 shows how the UE communicates with a plurality of Nodes B;
FIG. 17 is a block diagram showing the configuration of Node B according to Embodiment 2 of the present invention;
FIG. 18 is a block diagram showing the configuration of a UE according to Embodiment 2 of the present invention;
FIG.19 is a sequence diagram showing an overview of communication steps when the UE shown in FIG. 18 performs handover;
FIG.20 is a conceptual diagram showing a measurement report;
FIG.21 is a block diagram showing the configuration of Node B according to Embodiment 3 of the present invention;
FIG.22 shows how control information is created from cell level information and neighboring cell information of the own cell;
FIG.23 is a block diagram showing the configuration of a UE according to Embodiment 3 of the present invention; and
FIG.24 shows how channel setting information is developed.

### Best Mode for Carrying Out the Invention

Embodiments of the present invention will be explained below in detail with reference to the accompanying drawings. However, configurations having the same functions among the embodiments will be assigned the same reference numerals and overlapping explanations will be omitted.

### (Embodiment 1)

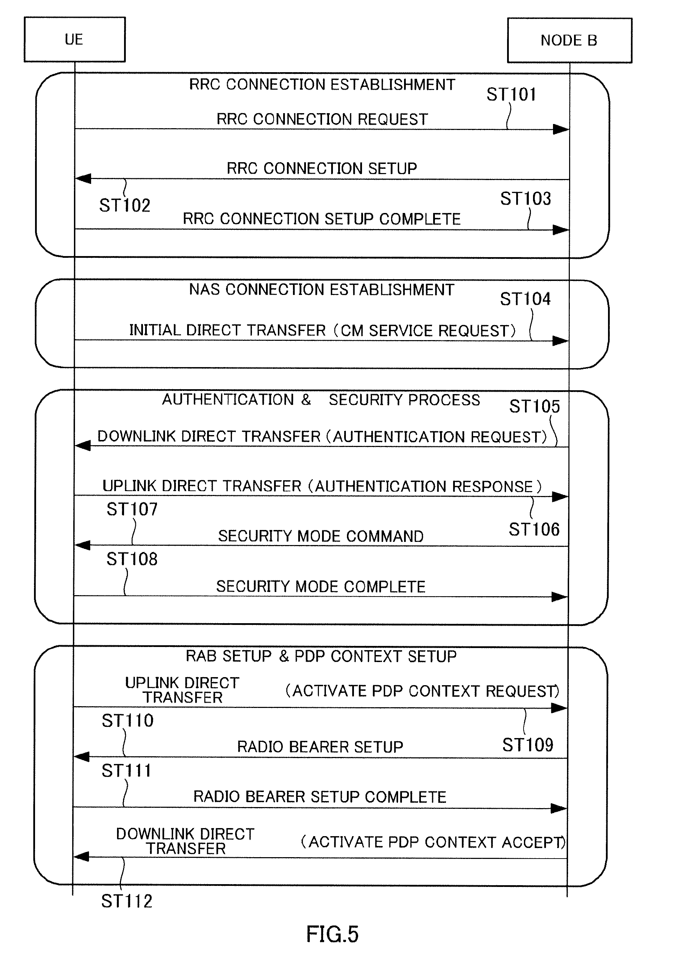

First, general call connection steps for a radio communication terminal apparatus (hereinafter "UE (User Equipment)") and a radio communication base station apparatus (hereinafter "Node B") will be explained using FIG.5. In ST101 in FIG.5, the UE transmits an RRC connection request message to Node B, and, in ST102, Node B transmits an RRC connection setup message to the UE in response to the RRC connection request message and reports UE identity and channel setting for control information or the like.

In ST103, the UE performs a channel setting on the UE side according to the content reported with the RRC connection setup message and transmits an RRC connection setup complete message to Node B as a report on completion of setting.

RRC connection establishment is completed through these processing in ST101 to ST103. In this RRC connection establishment, RB1 (applying an RLC UM mode), RB2 (applying RLC AM for transmission of an RRC message not including a NAS message) and RB3 (applying RLC AM for transmission of an RRC message including a NAS message) of an SRB (Signaling Radio Bearer) which is a radio bearer for transmitting control information, are generally established as channels. The contents to be set for the respective channels include the priority of the channel, a PDU length of a message to be transmitted, a transport channel type to be used and other transport channel information in addition to the above-described modes of RLC.

Next, in ST104, the UE creates a CM service request, which is a NAS message for requesting the start of service, and transmits to Node B, an initial direct transfer message, which is an RRC message, including the created CM service request. Node B starts management of the UE in MM using the initial direct transfer message as a trigger. NAS connection establishment is completed by the processing in ST104.

In ST105, Node B transmits to the UE, a downlink direct transfer message including an authentication request. Furthermore, in ST106, the UE transmits to Node B, an uplink direct transfer message including an authentication response. By this means, the UE and Node B perform authentication.

In ST107, Node B transmits a security mode command message to the UE and reports the settings of confidentiality/encryption including information of random numbers used for security. In ST108, the UE transmits a security mode complete message to Node B at an uplink control timing in response to the security mode command message. The authentication and security process are completed by processing in ST105 to ST108.

In ST109, the UE includes a NAS message in the RRC message and transmits a request for establishing PDP context (packet session) to Node B, and, in ST110, Node B transmits a radio bearer setup message to the UE and sets an RAB (Radio Access Bearer) which is a channel for traffic data communication.

In ST111, the UE transmits a radio bearer setup complete message to Node B and reports that the RAB has been successfully set, and, in ST112, Node B transmits a downlink direct transfer message including the response of establishment of PDP context to the UE, so that the completion of the establishment of PDP context is reported eventually. RAB setup and PDP context setup are completed by processing in ST109 to ST112.

As described above, a call is established through the processing in ST101 to ST112. In this case, each message includes many information that should be transmitted as the IE, messages particularly having a great amount of information include an RRC connection setup (establishment of a channel for control information) message which establishes a radio channel, and a radio bearer setup (establishment of a channel for traffic data) message, and the preconfiguration can be applied to these messages.

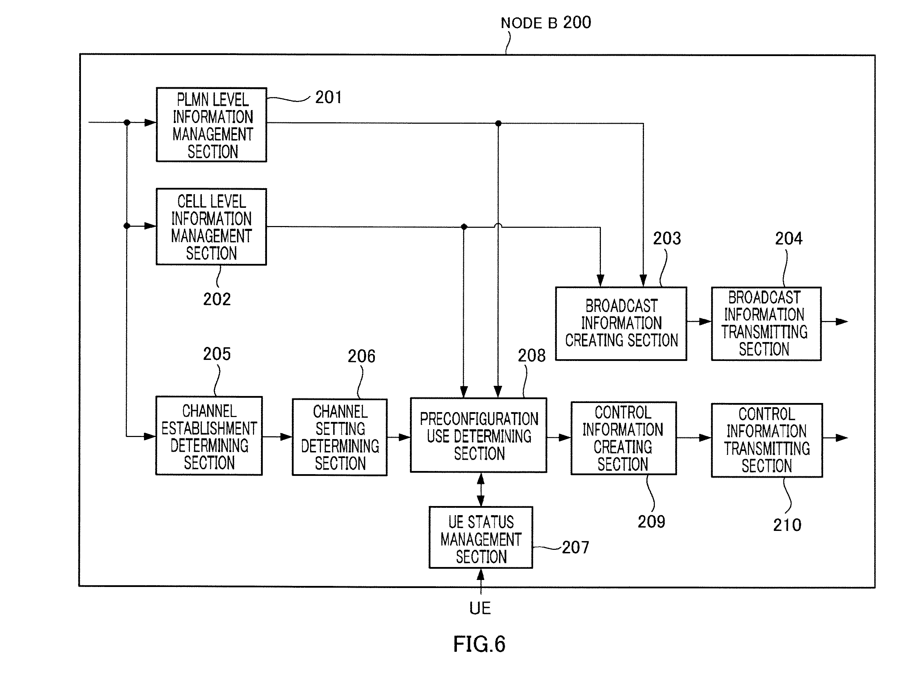

FIG. 6 is a block diagram showing the configuration of Node B 200 according to Embodiment 1 of the present invention. In this figure, PLMN information management section 201 manages preconfiguration information transmitted from a higher layer (or higher Node) (not shown) and managed at a PLMN (Public Land Mobile Network) level (hereinafter "PLMN level information").

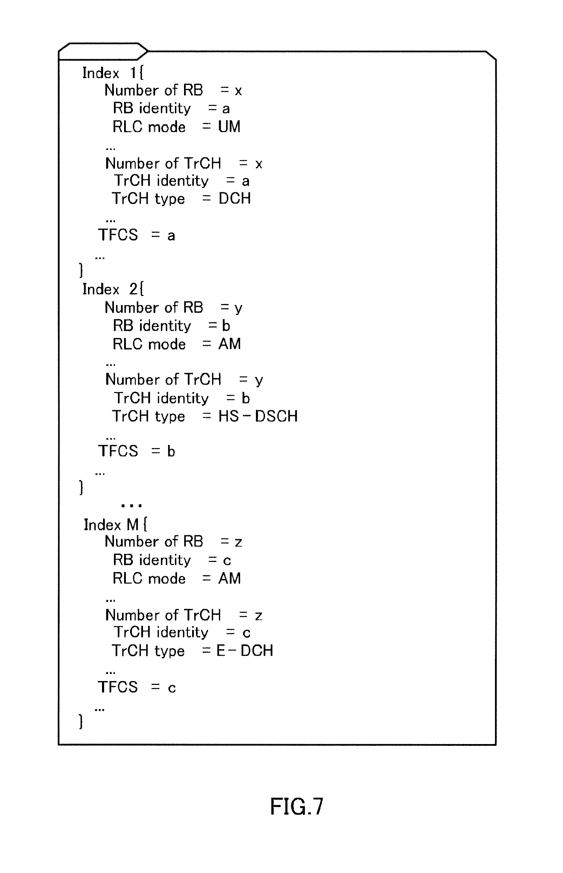

The PLMN level information includes broadcast information of system information block type 16 (see TS25.331 10.2.48.8.19) in a WCDMA system. As shown in FIG.7, for example, the PLMN level information includes the number of RBs, the identity of each RB, an RLC mode, the number of TrCHs, the identity of each TrCH, TrCH type, and TFCS, and different indexes are associated with different combinations of these information. The preconfiguration information managed at the PLMN level is outputted to broadcast information creating section 203 and preconfiguration use determining section 208. In addition to the above-described information, information specifying the version of this preconfiguration information may be included.

Cell level information management section 202 manages the preconfiguration information transmitted fromahigher layer (or higher Node) (not shown) and managed at the cell level (hereinafter "cell level information") .

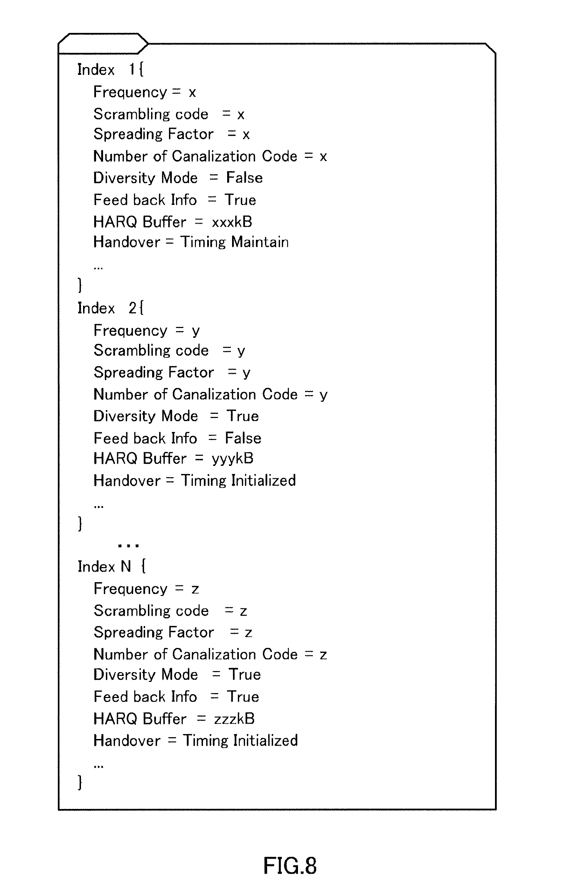

The cell level information includes content set by PhyCH information elements, uplink radio resources and downlink radio resources of the physical channel reconfiguration which is a message in the WCDMA system. For example, as shown in FIG.8, the cell level information includes frequency band, scrambling code number, spreading factor, the number of canalization codes, diversity mode, presence or absence of feedback information, HARQ buffer size and handover type, and different indexes are associated with combinations of these information. The preconfiguration information managed at the cell level is outputted to broadcast information creating section 203 and preconfiguration use determining section 208. In addition to the above-described information, information specifying the version of this preconfiguration information may be included.

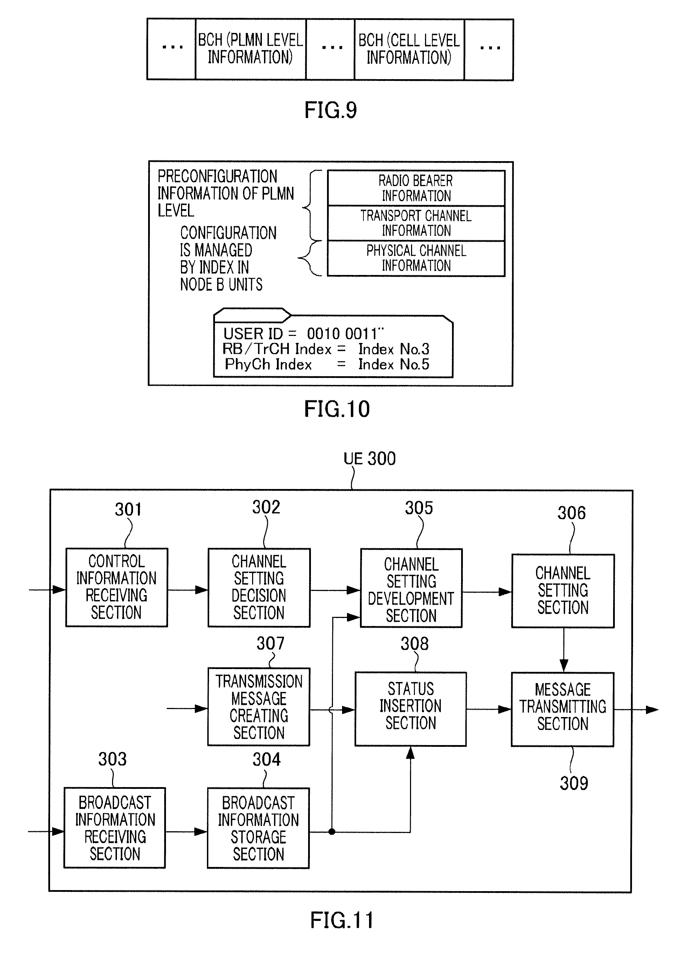

Broadcast information creating section 203 creates broadcast information including PLMN level information outputted from PLMN level information management section 201 and cell level information outputted from cell level information management section 202. As shown in FIG.9, it is assumed that the PLMN level information and the cell level information are assigned to different transmission units (e.g., blocks) in the broadcast information. By this means, the UE receives any preconfiguration selectively. The created broadcast information is outputted to broadcast information transmitting section 204. Here, the information can also be transmitted in the same block instead of different blocks.

Broadcast information transmitting section 204 applies predetermined transmission processing to the broadcast information outputted from broadcast information creating section 203 and transmits the broadcast information subject to the transmission processing to the UE.

Channel establishment determining section 205 receives a service request (such as speech and streaming) reported from a higher layer (not shown) and determines whether to establish or delete a channel. Specific examples of the service request reported from the higher layer include signaling connection establishment, mobile originating call establishment or packet mode connection establishment, emergency call establishment, short message service, supplementary service activation and voice group call establishment. Specific examples of the type of the established channel (such as channel for speech, channel for streaming and channel for signaling) include SRB1, 2 and 3 for signaling connection, TrCH and PhyCH corresponding thereto, RABs for speech, TrCH and PhyCH corresponding thereto, RABs for a packet, and TrCH and PhyCH corresponding thereto. The types of channel determined to be established (such as speech communication and streaming communication) are reported to channel setting determining section 206.

Channel setting determining section 206 determines a detailed setting of each channel (setting needed to establish a channel) based on the type of channel reported from channel establishment determining section 205. More specifically, channel setting determining section 206 determines the setting for each channel shown in FIG.2 and FIG.3, for example, in the case of RB setting, RB/RAB identity, CN domain identity (CS or PS), reestablishment timer (in the case of CS, the set time is shorter than PS), PDCP-related information (setting related to header compression, which is not necessary if no header compression is carried out), mode of RLC (AM (Acknowledged Mode), UM (Unacknowledged Mode) and TM (Transparent Mode)), various settings of RLC (such as window size of RLC and timer for ACK transmission), and information specifying to which TrCH, RB is mapped.

Furthermore, in the case of TrCH setting, channel setting determining section 206 determines, for example, TrCH identity, the type of TrCH (such as DCH, HS-DSCH and E-DCH), PDU size, TTI, coding rate, rate matching attribute, CRC size, TFCS (Transport Format Combination Set) and buffer size of the TrCH.

Furthermore, in the case of PhyCH setting, channel setting determining section 206 determines, for example, frequency information (information of frequency band), maximum uplink transmission power, scrambling code type, scrambling code number, spreading factor and radio timing information.

The setting information determined in this way (hereinafter "channel setting information") is outputted to preconfiguration use determining section 208.

UE status management section 207 acquires from the UE, a status showing whether or not the UE holds PLMN information and cell level information, manages the acquired UE status and ID of the UE, and, upon receiving a request for a status report of the UE from preconfiguration use determining section 208, UE status management section 207 sends back the requested status to preconfiguration use determining section 208.

Preconfiguration use determining section 208 decides whether the channel setting in format ion outputted from channel setting determining section 206 is included in the PLMN level information outputted from PLMN level information management section 201 and the cell level information outputted from cell level information management section 202. If the channel setting information is included in the preconfiguration information, preconfiguration use determining section 208 decides whether or not the corresponding UE can eventually use the preconfiguration per PLMN level and cell level, based on the UE status acquired from UE status management section 207. When the UE can use the preconfiguration, preconfiguration use determining section 208 outputs to control information creating section 209, both or one of the index of the corresponding PLMN level and the index of the cell level, and, when the UE cannot use the preconfiguration, preconfiguration use determining section 208 outputs the channel setting information itself to control information creating section 209.

Control information creating section 209 includes the index of the PLMN level outputted from preconfiguration use determining section 208 and the index of the cell level, or the channel setting information in the RRC connection setup message, a radio bearer setup message, a radio bearer reconfiguration message or the like and outputs them to control information transmitting section 210 as control information. For reference, FIG. 10 shows an image of the control information including the index of the PLMN level (Index No.3) and the index of the cell level (Index No.5).

Control information transmitting section 210 applies predetermined transmission processing to the control information outputted from control information creating section 209 and transmits the control information subjected to the transmission processing to the UE.

FIG.11 is a block diagram showing the configuration of UE 300 according to Embodiment 1 of the present invention. In this figure, control information receiving section 301 receives the control information transmitted from Node B 200 shown in FIG.6, applies predetermined reception processing to the received control information and outputs the control information subjected to the reception processing to channel setting decision section 302.

Channel setting decision section 302 decides the channel setting information from the control information outputted from control information receiving section 301, and, when the control information includes an index, extracts the index, and, when the control information includes channel setting information itself, extracts the channel setting information, and outputs the extracted index or channel setting information to channel setting development section 305.

Broadcast information receiving section 303 receives the broadcast information transmitted from Node B 200 shown in FIG.6, applies predetermined reception processing to the received broadcast information and outputs the broadcast information subjected to the reception processing to broadcast information storage section 304.

Broadcast information storage section 304 stores the PLMN level information and the cell level information included in the broadcast information outputted from broadcast information receiving section 303 and outputs the information to channel setting development section 305 and status insertion section 308.

When an index is outputted from channel setting decision section 302, channel setting development section 305 reads the corresponding configuration from broadcast information storage section 304 per PLMN level and cell level, and outputs the read configuration to channel setting section 306. Furthermore, when channel setting information is outputted from channel setting decision section 302, channel setting development section 305 outputs the channel setting information itself to channel setting section 306.

Channel setting section 306 makes a channel setting based on the configuration or channel setting information outputted from channel setting development section 305 and reflects the channel setting in message transmitting section 309.

Transmission message creating section 307 creates a message to be transmitted to Node B and outputs the created message to status insertion section 308.

Status insertion section 308 inserts a status showing that the preconfiguration information is stored in broadcast information storage section 304 in the transmission message outputted from transmission message creating section 307 per PLMN level and cell level, and outputs the transmission message with the inserted status to message transmitting section 309.

As this status information, in addition to a flag showing whether or not the information is held, when the version of the preconfiguration information has been received together with the preconfiguration information, the content thereof can also be added.

Message transmitting section 309 applies predetermined transmission processing to the message outputted from status insertion section 308 and transmits the message subjected to the transmission processing to Node B using the channel set in channel setting section 306.

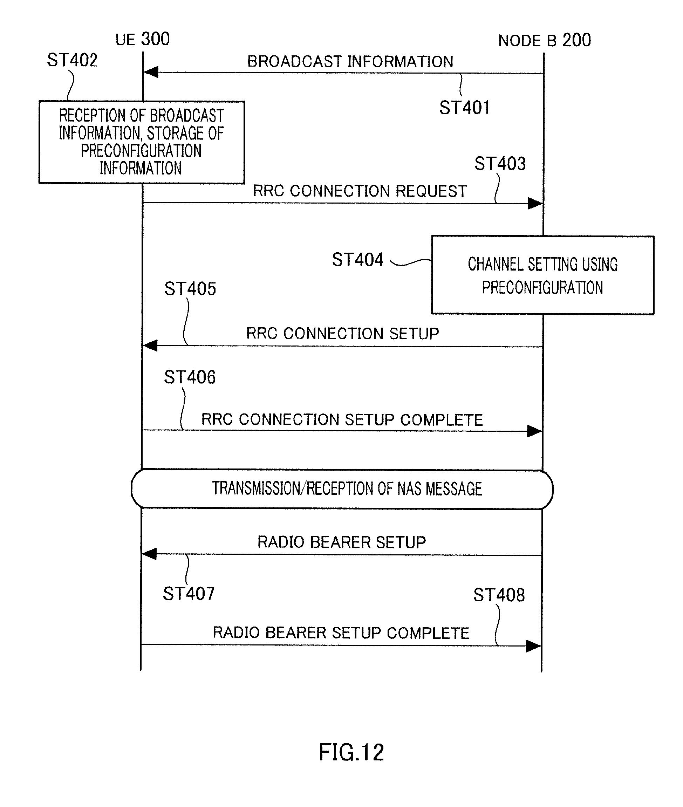

Next, an overview of call connection steps for Node B 200 shown in FIG.6 and UE 300 shown in FIG.11 will be explained using FIG.12. In FIG.12, Node B 200 broadcasts the preconfiguration information of the operator's RB/TrCH and the preconfiguration information to UE 300 through broadcast information in ST401, and UE 300 receives the broadcast information and stores the preconfiguration information included in the received broadcast information in ST402.

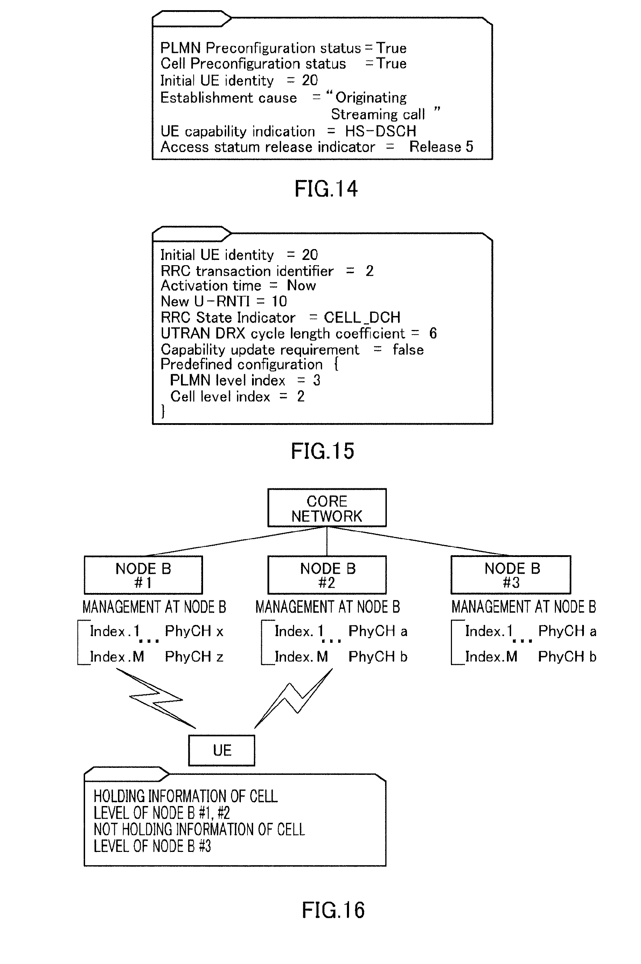

In ST403, UE 300 reports that the PLMN level information and the cell level information are stored, that is, UE 300 reports the status of UE 300 to Node B 200 using an RRC connection request message. As shown in FIG.14, the RRC connection request message reports the status of the PLMN level as the PLMN preconfiguration status and the status of the cell level as the cell preconfiguration status using "true" (held)or "false" (not held), respectively.

In ST404, Node B 200 performs a channel setting using the preconfiguration, and, in ST405, Node B 200 transmits to UE 300, the RRC connection setup message including the index of the PLMN level and the index of cell level showing the channel setting information set in ST404. For reference, FIG.15 shows an image of the RRC connection setup message.

In ST406, UE 300 transmits an RRC connection setup complete message to Node B 200 in response to the RRC connection setup message, and transmits/receives an NAS message to/from Node B 200.

In ST407, Node B 200 transmits to UE 300, the radio bearer setup message including the index of the PLMN level and the index of the cell level showing the channel setting information, and, in ST408, UE 300 transmits a radio bearer setup complete message to Node B 200 in response to the radio bearer setup message.

As described above, according to Embodiment 1, it is possible to reduce a message size in call connection by providing two layers of preconfiguration information with indexes associated with the configuration of an RB and a TrCH having different settings per PLMN and with the configuration of a PhyCH having different settings per cell, and applying a preconfiguration per PLMN level and cell level.

Although a case has been described with the present embodiment where indexes corresponding to the PLMN level and cell level are provided respectively, when, for example, only PhyCH information managed at the cell level is changed, it is also possible to transmit only indexes of the information to be changed. Furthermore, instead of managing the information managed at the PLMN level using one index, it is also possible tomanage indexes for the RB and the TrCH separately and use an index for the RB when only the RB is changed, for example.

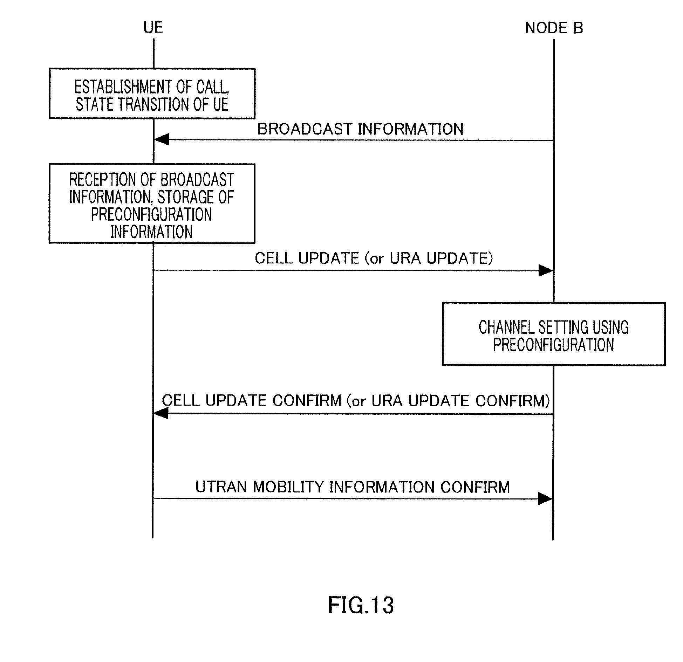

Although a case has been described using FIG.12 with the present embodiment where the operation is performed in a state where a call is established, operations in other states can also be performed. For example, there can be a case where, after the UE establishes a packet call, no communication is carried out for a while, and so the UE changes the state to a power-saving state. When communication is restarted from the call power-saving state or when the UE moves to another cell, the present embodiment is also applicable. More specifically, as shown in FIG.13, in communication steps between the UE and Node B, information of a status set for the RRC connection request this time is set to a cell update (or URA update) message used for reconnection, and an index shown by Node B in an RRC connection setup message is included in a cell update confirm (URA update confirm) message.

### (Embodiment 2)

Although a case has been described with Embodiment 1 where the UE holds cell level information of one cell, Embodiment 2 of the present invention will describe a case where the UE holds cell level information of a plurality of cells as shown in FIG.16.

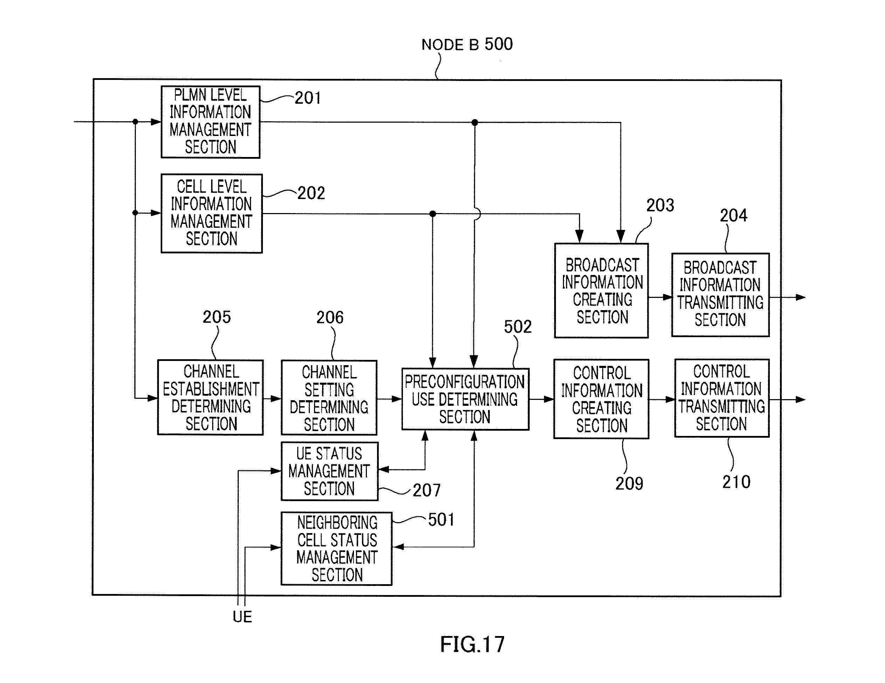

FIG.17 is a block diagram showing the configuration of Node B 500 according to Embodiment 2 of the present invention. FIG.17 differs from FIG.6 in that neighboring cell status management section 501 is added and preconfiguration use determining section 208 is replaced by preconfiguration use determining section 502.

In FIG. 17, neighboring cell status management section 501 acquires a status showing whether or not a UE holds PLMN information and cell level information of a neighboring cell from the UE, manages the acquired UE status and ID of the UE, and, upon receiving a request for a status report of the UE from preconfiguration use determining section 502, sends back the corresponding status to preconfiguration use determining section 502. This status information may add not only a flag showing whether or not the information is held but also content of the version of preconfiguration information if the version has been received together with the preconfiguration information.

When the UE moves to a neighboring cell and preconfiguration use determining section 502 commands the UE to perform handover, preconfiguration use determining section 502 decides whether or not the corresponding UE can eventually use the preconfiguration in the neighboring cell based on the neighboring cell status of the UE acquired from neighboring cell status management section 501. When the UE can use the preconfiguration in the neighboring cell, preconfiguration use determining section 502 outputs the index of the corresponding PLMN level and the index of the cell level to control information creating section 209, and, when the UE cannot use the preconfiguration, preconfiguration use determining section 502 outputs the channel setting information itself outputted from channel setting determining section 206 to control information creating section 209.

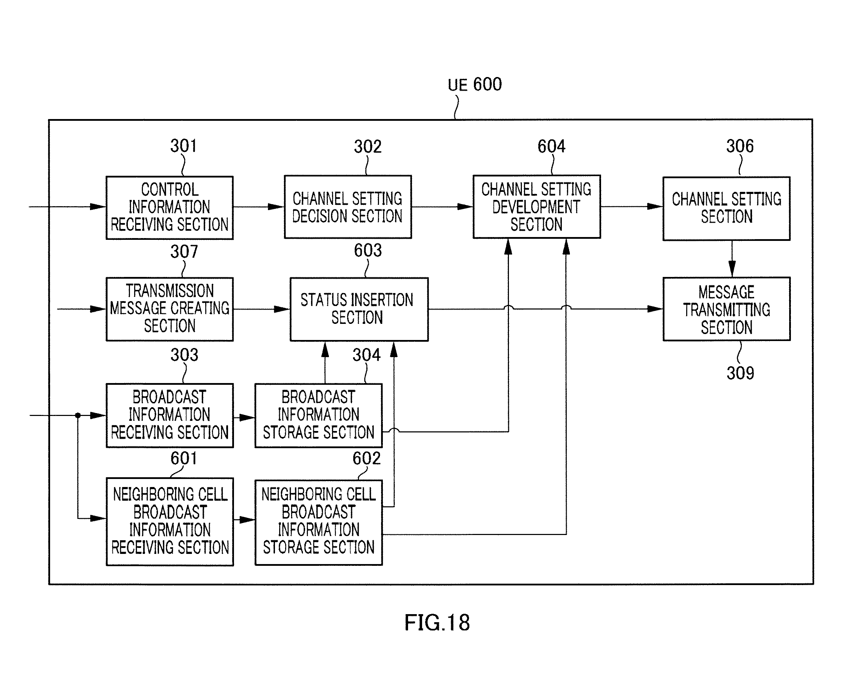

FIG.18 is a block diagram showing the configuration of UE 600 according to Embodiment 2 of the present invention. FIG. 18 differs from FIG.11 in that neighboring cell broadcast information receiving section 601 and neighboring cell broadcast information storage section 602 are added, status insertion section 308 is replaced by status insertion section 603 and channel setting development section 305 is replaced by channel setting development section 604.

Neighboring cell broadcast information receiving section 601 receives broadcast information transmitted from a neighboring cell other than the own cell, applies predetermined reception processing to the received broadcast information and outputs the broadcast information subjected to the reception processing to neighboring cell broadcast information storage section 602.

Neighboring cell broadcast information storage section 602 stores the PLMN level information and the cell level information included in the broadcast information outputted from neighboring cell broadcast information receiving section 601, and outputs the information to status insertion section 603 and channel setting development section 604.

Status insertion section 603 inserts a status showing whether or not preconfiguration information is stored in broadcast information storage section 304 and a status showing whether or not preconfiguration information of a neighboring cell is stored in neighboring cell broadcast information storage section 602 into a transmission message outputted from transmission message creating section 307 per PLMN level and cell level, and outputs the transmission message with the inserted status to message transmitting section 309.

Channel setting development section 604 reads the configuration corresponding to the index outputted from channel setting decision section 302 from broadcast information storage section 304 per PLMN level and cell level, and outputs the read configuration to channel setting section 306. Furthermore, when the content outputted from channel setting decision section 302 is cell level information of the neighboring cell, channel setting development section 604 reads the cell level information of the neighboring cell which is the configuration corresponding to the set index from neighboring cell broadcast information storage section 602, and outputs the read cell level information to channel setting section 306.

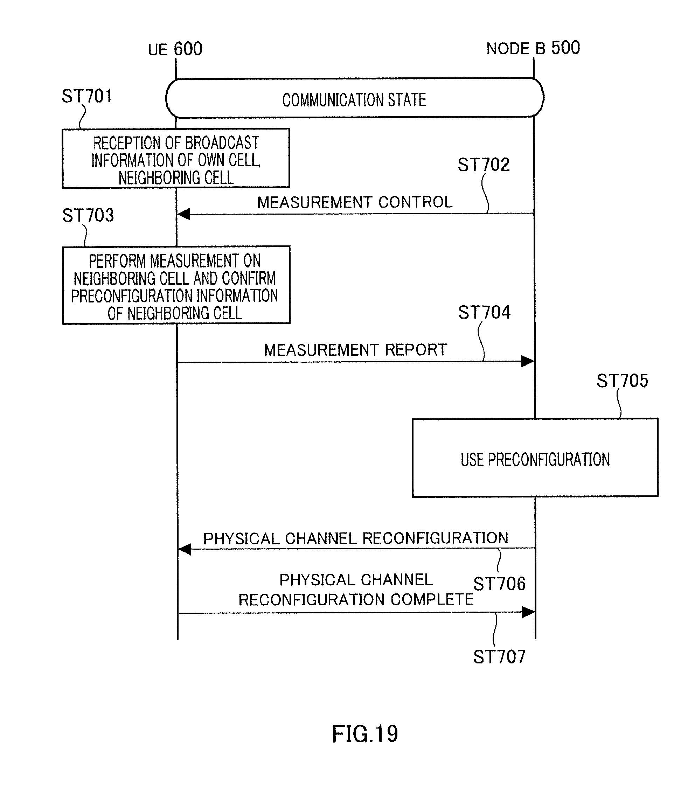

Next, an overview of communication steps, when UE 600 shown in FIG. 18 performs handover, will be explained using FIG.19. In FIG.19, UE 600 and Node B 500 are communicating with each other, in ST701, UE 600 receives broadcast information of the own cell and neighboring cell, and, in ST702, Node B 500 transmits to UE 600 a measurement control message which requests measurement of received quality of the neighboring cell.

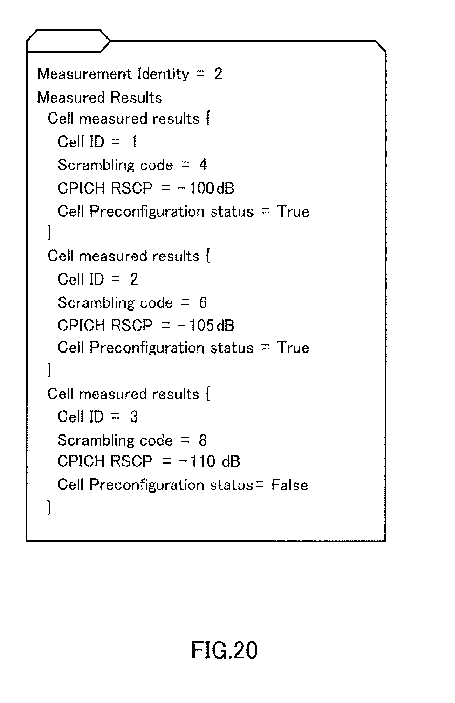

In ST703, UE 600 measures the received quality of the neighboring cell (measurement), confirms whether or not preconfiguration information of the measured neighboring cell is held, and, in ST704, UE 600 transmits the measurement result of the received quality of the neighboring cell and the status of the neighboring cell to Node B 500 as a measurement report. As shown in FIG.20, the measurement report reports the status of the neighboring cell using "true" (held) or "false" (not held) as a cell preconfiguration status.

In ST705, when Node B 500 decides that the received quality at UE 600 in the neighboring cell is better than in the own cell, Node B 500 decides to make UE 600 perform handover, decides whether or not UE 600 holds the preconfiguration information of the handover destination cell, from the status of the neighboring cell, and determines to use the preconfiguration.

In ST706, Node B 500 transmits physical channel reconfiguration to UE 600 to command handover and report an index of a cell level of the neighboring cell, and, in ST707, UE 600 transmits a physical channel reconfiguration complete message to Node B 500 in response to the physical channel reconfiguration.

Here, it is assumed that measurement control transmitted in ST702 is the same as the conventional one. However, by extension, the information of measurement control can also include information of the preconfiguration. For example, by including information specifying the version of preconfiguration in the measurement control, it is possible to confirm whether or not the preconfiguration information held in the UE is the latest one. When the held preconfiguration information is not the latest one, processing such as deleting the held information may be carried out.

As described above, according to Embodiment 2, the UE acquires preconfiguration information of the neighboring cell and receives an index showing cell level information of the neighboring cell from Node B upon handover to the neighboring cell, so that it is possible to reduce a message size during handover.

### (Embodiment 3)

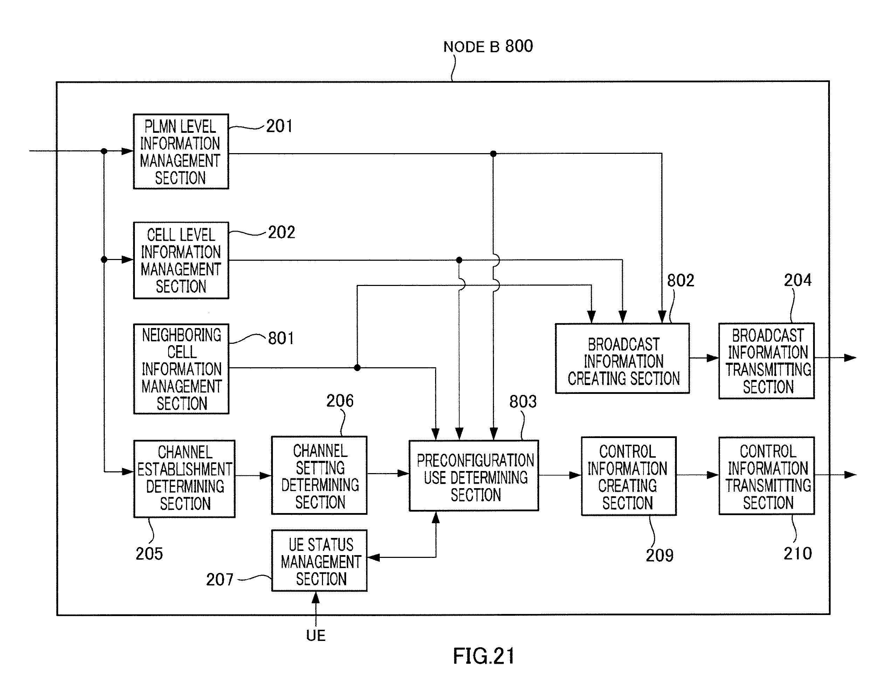

FIG.21 is a block diagram showing the configuration of Node B 800 according to Embodiment 3 of the present invention. FIG.21 differs from FIG.6 in that neighboring cell information management section 801 is added, broadcast information creating section 203 is replaced by broadcast information creating section 802 and preconfiguration use determining section 208 is replaced by preconfiguration use determining section 803.

In FIG.21, neighboring cell information management section 801 manages information needed to identify a cell such as a frequency band and scrambling code (hereinafter "neighboring cell information") and outputs the managed neighboring cell information to broadcast information creating section 802 and preconfiguration use determining section 803.

Broadcast information creating section 802 creates broadcast information including the PLMN level information outputted from PLMN level information management section 201, the cell level information outputted from cell level information management section 202 and the neighboring cell information outputted from neighboring cell information management section 801 and outputs the created broadcast information to broadcast information transmitting section 204.

Preconfiguration use determining section 803 decides whether or not channel setting information outputted from channel setting determining section 206 is included in any of the PLMN level information outputted from PLMN level information management section 201, the cell level information outputted from cell level information management section 202 and the neighboring cell information outputted from neighboring cell information management section 801. When the channel setting information is included in these information, preconfiguration use determining section 803 decides whether or not the corresponding UE can eventually use the preconfiguration, based on the UE status acquired from UE status management section 207 per PLMN level and cell level. When the UE can use the preconfiguration, preconfiguration use determining section 803 outputs both or one of an index of the corresponding PLMN level and an index of a cell level to control information creating section 209, and, when the UE cannot use the preconfiguration, preconfiguration use determining section 803 outputs the channel setting information itself to control information creating section 209.

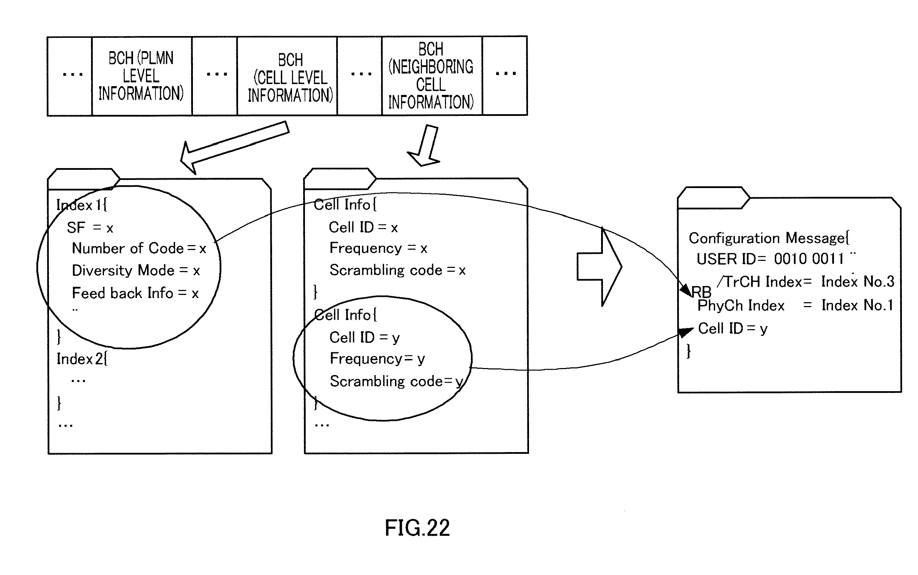

When preconfiguration use determining section 803 decides that the only difference in configuration information between the own cell and the neighboring cell is the neighboring cell information, control information creating section 209 cerates control information by combining the cell level information and the neighboring cell information as shown in FIG. 22 and outputs the created control information to control information transmitting section 210.

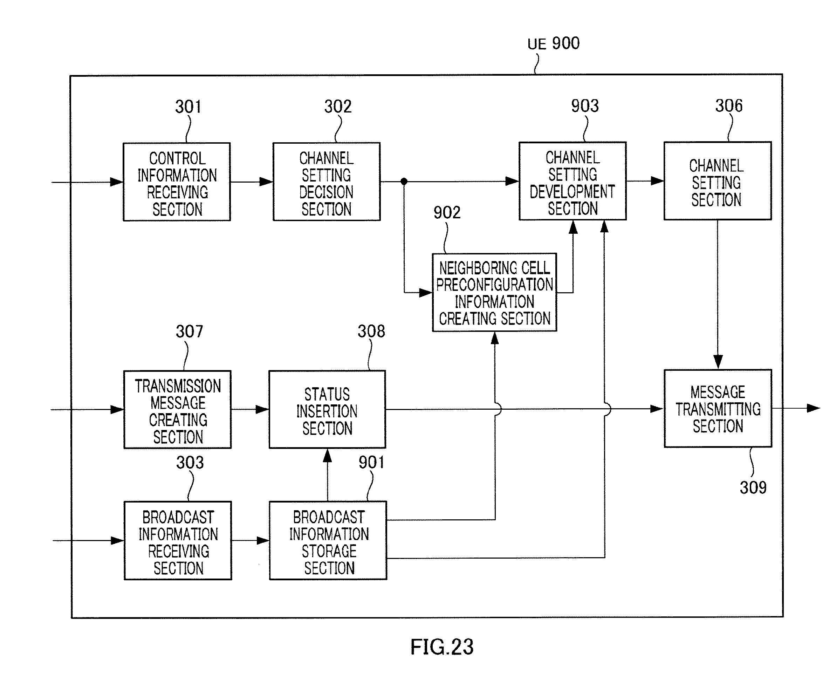

FIG.23 is a block diagram showing the configuration of UE 900 according to Embodiment 3 of the present invention. FIG.23 differs from FIG.11 in that neighboring cell preconfiguration information creating section 902 is added, broadcast information storage section 304 is replaced by broadcast information storage section 901 and channel setting development section 305 is replaced by channel setting development section 903.

In FIG.23, broadcast information storage section 901 stores the PLMN level information, the cell level information and the neighboring cell information included in the broadcast information outputted from broadcast information receiving section 303, the PLMN level information and the cell level information are outputted to channel setting development section 903, and the neighboring cell information is outputted to neighboring cell preconfiguration information creating section 902. Furthermore, a status showing whether or not such information is stored is outputted to status insertion section 308.

Neighboring cell preconfiguration information creating section 902 reads cell level information corresponding to the index of the cell level outputted from channel setting decision section 302 and neighboring cell information corresponding to a cell ID outputted from channel setting decision section 302, from broadcast information storage section 901, and creates preconfiguration information of the neighboring cell according to the read cell level information and neighboring cell information. The created preconfiguration information is outputted to channel setting development section 903.

Channel setting development section 903 reads the PLMN level information corresponding to the index of the PLMN level outputted from channel setting decision section 302 from broadcast information storage section 901, develops channel setting information from the read PLMN level information and preconfiguration information of the neighboring cell outputted from neighboring cell preconfiguration information creating section 902, and outputs the developed channel setting information to channel setting section 306.

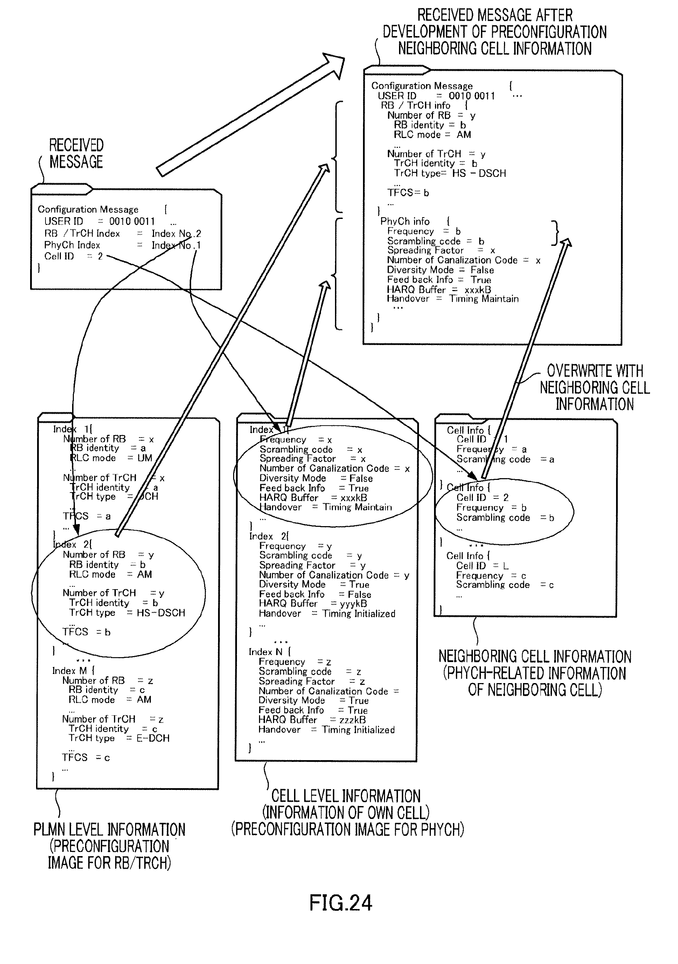

A state will be explained using FIG.24 where the channel setting information is developed based on the control information received by UE 900 in the above-described configuration. Channel setting decision section 302 outputs an index (index No.2) of the PLMN level from the received message to channel setting development section 903 and outputs an index (index No. 1) of the cell level and a cell ID (=2) to neighboring cell preconfiguration information creating section 902.

Neighboring cell preconfiguration information creating section 902 reads the cell level information corresponding to index No.1 of the cell level and the neighboring cell information corresponding to cell ID=2 from broadcast information storage section 901, respectively, overwrites the read cell level information with the neighboring cell information, creates preconfiguration information of the neighboring cell and outputs the created neighboring cell preconfiguration information to channel setting development section 903.

Channel setting development section 903 reads the PLMN level information corresponding to index No.2 of the PLMN level from broadcast information storage section 901, and, by combining the read PLMN level information with the neighboring cell preconfiguration information, develops channel setting information of the neighboring cell.

In this way, according to Embodiment 3, when the UE is made to perform handover to a neighboring cell having the same PhyCH setting as the own cell, neighboring cell information to identify a cell neighboring the own cell is included in broadcast information, and the UE creates cell level information of the neighboring cell using the cell level information of the own cell and neighboring cell information, so that it is possible to perform handover to the neighboring cell without acquiring broadcast information from the neighboring cell.

Although a case has been described with the above-described embodiments where the preconfiguration information is divided into a PLMN level and a cell level, the present invention is not limited thereto, and the preconfiguration information may also be divided into three or more levels including a PLMN level, a RAN level (a set of a plurality of cells) and a cell level or divided into two different levels including a PLMN level and a RAN level.

Although a case has been described with the above-described embodiments where Node B creates broadcast information and control information, the present invention is not limited thereto, and some or all functions of Node B may be assigned to apparatuses higher than Node B, for example, a core network node such as an RNC (Radio Network Controller), SGSN and GGSN.

Although a case has been described with the above embodiments as an example where the present invention is implemented with hardware, the present invention can be implemented with software.

Furthermore, each function block employed in the description of each of the aforementioned embodiments may typically be implemented as an LSI constituted by an integrated circuit. These may be individual chips or partially or totally contained on a single chip. "LSI" is adopted here but this may also be referred to as "IC, " "system LSI," "super LSI," or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells in an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The present application is based on Japanese Patent Application No.2005-238966, filed on August 19, 2005, entire content of which is expressly incorporated by reference herein.

### Industrial Applicability

The radio communication terminal apparatus, radio communication base station apparatus, radio communication system and call connection method according to the present invention can reduce a message size in call connection and are applicable to, for example, WCDMA radio communication systems.

## Claims

1. A radio communication base station apparatus comprising a management section that manages configuration information and indexes representing the configuration information in a layered manner, the configuration information comprising a combination pattern of channel setting information.

2. The radio communication base station apparatus according to claim 1, further comprising:
a broadcast section that broadcasts preconfiguration information of a public land mobile network level comprising setting information of a radio bearer and a transport channel having a common setting among operators, and preconfiguration information of a cell level comprising setting information of a physical channel having different settings per cell;
a control information creating section that creates control information that specifies the channel setting information using an index representing the preconfiguration information of the public land mobile network level and an index representing the preconfiguration information of the cell level; and
a transmitting section that transmits the created control information.

3. The radio communication base station apparatus according to claim 2, wherein the broadcast section broadcasts the preconfiguration information of the public land mobile network level and the preconfiguration information of the cell level in different transmission units.

4. The radio communication base station apparatus according to claim 2, further comprising a management section that manages a radio communication terminal 1 apparatus communicating with the radio communication base station apparatus as to whether or not the radio communication terminal apparatus holds preconfiguration information of a neighboring cell,
wherein, when the radio communication terminal apparatus holds the preconfiguration information of the neighboring cell, the control information creating section includes the preconfiguration information of the neighboring cell in the control information and commands the radio communication terminal apparatus to perform handover.

5. The radio communication base station apparatus according to claim 2, further comprising a holding section that holds neighboring cell information that identifies the neighboring cell,
wherein the control information creating section includes the neighboring cell information and the index representing the preconfiguration information of the cell level in the control information, and commands a radio communication terminal apparatus in communication to perform handover.

6. A radio communication terminal apparatus comprising:
a management section that manages configuration information and indexes representing the configuration information in a layered manner, the configuration information comprising a combination pattern of channel setting information;
a receiving section that receives the indexes; and
a channel setting section that sets channels using configuration information represented by the received indexes.

7. The radio communication terminal apparatus according to claim 6, further comprising:
a storage section that stores preconfiguration information of a public land mobile network level comprising setting information of a radio bearer and a transport channel having a common setting among operators, and preconfiguration information of a cell level comprising setting information of a physical channel having different settings per cell; and
a report section that reports that the storage section stores the preconfiguration information of the public land mobile network level and the preconfiguration information of the cell level.

8. The radio communication terminal apparatus according to claim 7, wherein the report section reports that the storage section stores the preconfiguration information of the cell level transmitted from a neighboring cell and reports information of the neighboring cell holding the preconfiguration information.

9. The radio communication terminal apparatus according to claim 8, wherein the report section, upon reporting received quality of a signal transmitted from the neighboring cell, reports the information of the neighboring cell holding the preconfiguration information.

10. The radio communication terminal apparatus according to claim 7, further comprising a channel setting section that sets a channel to a neighboring cell using neighboring cell information that identifies the neighboring cell and the preconfiguration information of the cell level.

11. A radio communication system comprising:
a radio communication base station apparatus that comprises:
a broadcast section that broadcasts preconfiguration information of a public land mobile network level comprising setting information of a radio bearer and a transport channel having a common setting among operators, and preconfiguration information of a cell level comprising setting information of a physical channel having different settings per cell;
a control information creating section that creates control information that specifies channel setting information using an index representing the preconfiguration in format ion of the public land mobile network level and an index representing the preconfiguration information of the cell level; and
a transmitting section that transmits the created control information; and
a radio communication terminal apparatus that comprises:
a receiving section that receives the preconfiguration information of the public land mobile network level, the preconfiguration information of the cell level and the indexes transmitted from the radio communication base station apparatus;
a storage section that stores the received preconfiguration information of the public land mobile network level and the preconfiguration information of the cell level; and
a channel setting section that reads preconfiguration information represented by the indexes from the storage section and sets channels using the read preconfiguration information.

12. A call connection method comprising:
a broadcast step of broadcasting, from a radio communication base station apparatus, preconfiguration information of a public land mobile network level comprising setting information of a radio bearer and a transport channel having a common setting among operators, and preconfiguration information of a cell level comprising setting information of a physical channel having different settings per cell;
a storing step of storing, in a radio communication terminal apparatus, the preconfiguration information of the public land mobile network level and the preconfiguration information of the cell level broadcasted from the radio communication base station apparatus;
a transmission step of transmitting, from the radio communication base station apparatus, control information that specifies channel setting information using an index representing the preconfiguration information of the public land mobile network level and an index representing the preconfiguration information of the cell level; and
a channel setting step of setting channels using the preconfiguration information represented by the indexes stored in the storing step and transmitted from the radio communication base station apparatus.
